# EUROPÄISCHE PATENTSCHRIFT

(11) **EP 1 919 280 B1**
(45) Veröffentlichungstag und Bekanntmachung des Hinweises auf die Patenterteilung: **13.11.2013**
(21) Anmeldenummer: 05792079.5
(22) Anmeldetag: 02.09.2005
(51) Int. Cl.: A01M 23/20, A01M 23/22

(54) **TIERFALLE**
ANIMAL TRAP
PIEGE POUR ANIMAUX

(43) Veröffentlichungstag der Anmeldung: 14.05.2008
(73) Patentinhaber: Swissinno Solutions AG, 9000 St. Gallen (CH)
(72) Erfinder: LE LAIDIER, Gabriel, CH-9000 St. Gallen (CH); WALSTAD, Dennis, Elburn, 60119 (US); JANCIC, Silvin, CH-5610 Villmergen (CH)
(74) Vertreter: Hepp Wenger Ryffel AG
(86) Internationale Anmeldenummer: PCT/EP2005/054338
(87) Internationale Veröffentlichungsnummer: WO 2007/028416

(56) Entgegenhaltungen:
- GB-A- 1 382 822
- US-A- 2 412 518
- US-A- 2 774 175
- US-A- 2 803 918
- US-B1- 6 564 501

## Beschreibung

Die Erfindung betrifft eine Tierfalle gemäss dem Oberbegriff von Anspruch 1. Derartige Tierfallen dienen dem Lebendfang unter anderem von Nagetieren, insbesondere von Mäusen oder anderen Kleintieren.

Es sind bereits zahlreiche Mausefallen bekannt und gebräuchlich. Eine gattungsmässig vergleichbare Mausefalle beschreibt beispielsweise DE 20 2004 016 935 U1. Diese Mausefalle besteht im Wesentlichen aus zwei kastenförmigen Gehäuseteilen, wobei sie etwa mittig schwenkbar miteinander verbunden sind. Das untere Gehäuseteil ist dabei nach oben und im Bereich einer Stirnseite offen ausgebildet. Das obere Gehäuseteil weist zur Aufnahme eines Köders an seiner hinteren Stirnseite eine durch Abwinklungen geschaffene Aufnahmewanne für einen Köder auf. Entnimmt nun eine Mause den Köder aus der Ausnahmewanne, so schliesst sich die Falle aufgrund des Ungleichgewichts des oberen Gehäuseteils in einer Schwenkbewegung ("Schwerkraft-Prinzip"). Da die Mausefalle lediglich durch Platzieren des Köders in Offenstellung gehalten ist, ergeben sich Nachteile hinsichtlich Handhabung der Falle. In der Praxis hat sich weiter gezeigt, dass häufig Fehlauslösungen auftreten können, so beispielsweise wenn Tiere die Oberseite des Gehäuses begehen.

Aus der US 2,803,918 ist eine Tierfalle bekannt geworden, die ein schwenkbares Deckelgehäuseteil aufweist. Im Innern der Falle ist eine Auslöseanordnung mit einer Trittplattform angeordnet.

Es ist deshalb eine Aufgabe der vorliegenden Erfindung, die Nachteile des Bekannten zu vermeiden, insbesondere eine Tierfalle der eingangs genannten Art zu schaffen, welche praktisch keine Fehlauslösungen durch Tiere zulässt. Weitere soll sich die Tierfalle durch eine einfache Handhabung auszeichnen. Sodann soll sie auch auf einfache Art und Weise herstellbar sein. Diese Aufgaben werden erfindungsgemäss mit einer Tierfalle gelöst, welche die Merkmale in Anspruch 1 aufweist.

Das Grundgehäuseteil kann einen Bodenabschnitt, zwei Seitenwände, eine Rückwand und eine der Rückwand gegenüberliegende Eingangsöffnung aufweisen. Das Deckelgehäuseteil ist vorzugsweise derart am Grundgehäuseteile schwenkbar befestigt, dass deren Schwenkachse senkrecht zu den Seitenwänden des Grundgehäuseteils verläuft. Durch die Verwendung eines Gesperres mit mechanischen Rückhaltemitteln ist gewährleistet, dass bei Begehung des Dachabschnitts durch Tiere eine unbeabsichtigte Auslösung verhindert werden kann. Selbstverständlich kann die Tierfalle jedoch derart ausgestaltet sein, dass ein Anwender diese in Schliessstellung überführen kann. Durch die Anordnung eines mechanischen Auslösemechanismus im Inneren des Gehäuses kann ein gewünschter Auslösevorgang genau vorgegeben werden. In Frage kommen dabei insbesondere berührungssensitive Auslöseanordnungen, es wären aber auch andere Lösungen denkbar.

In einer ersten Ausführungsform kann das Deckelgehäuseteil bei Aufhebung der Blockierung unter seinem Eigengewicht in einer Art Pendelbewegung in die Schliessstellung schwenken. Dazu kann das Deckelgehäuseteil in der Offenstellung derart im Grundgehäuseteil gelagert sein, dass es unter Einwirkung der Schwerkraft nach dem Auslösevorgang in die Schliessstellung überführbar ist. Beispielsweise könnte dazu das Deckelgehäuseteil exzentrisch im Grundgehäuseteil gelagert sein. Ein Vorteil des Schwerkraft-Prinzips besteht darin, dass die Tierfalle einfach in Herstellung und Handhabung ist.

Zusätzlich oder alternativ kann das Schwenkteil unter Federvorspannung in Offenstellung gehalten sein. Durch Federkraft kann die Tierfalle auf vorteilhafte Art und Weise geschlossen werden. Somit kann durch erhöhte Schliesskraft beispielsweise ein allfälliges Entweichen eines Tiers während des Schliessvorgangs aus dem Inneren des Gehäuses unterbunden werden.

Die Auslöseanordnung kann zum Auslösen der Schwenkbewegung eine Trittplattform oder eine Stossplattform enthalten. Die Trittplattform oder Stossplattform wäre dabei vorzugsweise im Bereich der Rückwand zu positionieren. Durch das Betreten der Trittplattform durch ein Tier kann der Auslösevorgang zuverlässig gestaltet und die Fangquote erheblich erhöht werden. Ein weiterer Vorteil dieser Ausführungsform besteht darin, dass ein Köder lediglich als Lockmittel und unabhängig von der Auslöseanordnung eingesetzt werden kann.

Vorteilhaft kann die Auslöseanordnung eine Trittplattform aufweisen, an welcher zwei seitlich entlang den Seitenwänden sich erstreckende, parallele Arme anschliessen, die schwenkbar im Grundgehäuseteil gelagert sind. Durch den so geschaffenen Hebel kann die Tierfalle bereits bei geringeren Trittgewichten ausgelöst werden.

Erfindungsgemäss ist die Auslöseanordnung wippenartig im Grundgehäuse gelagert. Die Wippe weist seitlich entlang den Seitenwänden sich erstreckende, parallele Arme auf, an denen an einem Ende eine Trittplattform und am gegenüberliegenden Ende ein Einführabschnitt angeordnet ist. Dieser Einführabschnitt ist ein im Querschnitt etwa U-förmiger, gegen den Bodenabschnitt zum Durchlassen des Tiers offen ausgebildeter Abschnitt. Beispielsweise kann der Einführabschnitt eine U-Profilform mit zwei Seitenabschnitten und einem Verbindungssteg aufweisen, wodurch die Tierfalle bereits beim Eintritt eines grösseren Tiers durch Anstossen an den Verbindungssteg ausgelöst werden könnte.

Seitlich an den Armen der Auslöseanordnung können Gelenknocken angeordnet sein, die in korrespondierende Gelenkpfannen in den Seitenwänden des Grundgehäuseteils eingreifen. Diese Gelenkpfannen können insbesondere durch vorzugsweise kreisförmige Öffnunggen oder Bohrungen gebildet werden.

Vorteilhaft ist es, wenn die Rückhaltemittel durch Widerlager auf den Armen der Auslöseanordnung gebildet sind, an welche jeweils Sperrglieder des Deckelgehäuseteils in Offenstellung sich abstützen. Ein Widerlager kann beispielsweise ein sägezahnartiger Vorsprung mit einer gegen die Oberseite gerichteten Sperrflanke als Anschlag zum Abstützen des Sperrglieds sein. Dabei kann das Widerlager an einer der Oberseite zugewandten Fläche des Arms angeformt sein.

Der Dachabschnitt kann eine vordere Deckfläche und eine derart um einen Neigungswinkel gegenüber der vorderen Deckfläche abgewinkelte hintere Deckfläche aufweisen, dass die vordere Deckfläche in Schliessstellung und die hintere Deckfläche in Offenstellung etwa parallel zum Bodenabschnitt verläuft. Somit würde der Schwenkwinkel dem Neigungswinkel entsprechen. Eine solche Anordnung zeichnet sich durch eine gute Handhabbarkeit und ergonomische Form aus.

Seitlich am Deckelgehäuseteil können jeweils Gelenknocken angeordnet sein, die in korrespondierende Gelenkpfannen, insbesondere gebildet durch Öffnungen in den Seitenwänden eingreifen.

Am Dachabschnitt des Deckelgehäuseteils kann eine Verriegelungsvorrichtung mit wenigstens einer Sperrklinke angeordnet sein, die in Schliessstellung an einem korrespondierenden Widerlager am Gehäuse einrastbar ist. Als Widerlager können beispielsweise an den Seitenwänden angeordnete Nockenvorsprünge dienen. Eine Verriegelungsvorrichtung kann ein Öffnen der Tierfalle durch ein gefangenes Tier auf einfache Art Und Weise verhindern.

Für einen Anwender kann es vorteilhaft sein, wenn zum Wiederherstellen der Offenstellung des Deckelgehäuseteils die Verriegelungseinrichtung einen Entriegelungsknopf aufweist. Dadurch wäre die Tierfalle auf einfache Art und Weise zu bedienen.

In einer weiteren Ausführungsform kann die Verriegelungseinrichtung ein separates am Deckelgehäuseteils gelagertes, vorzugsweise einstückiges Bauteil mit einer Sperrklinke und einem Entriegelungsknopf zum Wiederherstellen der Offenstellung sein. Die Verriegelungseinrichtung kann durch Einwirken, beispielsweise durch Druck auf den Entriegelungsknopf derart schwenkbar sein, dass die Sperrklinke vom Widerlager freigegeben werden kann. Mit einer solchen Anordnung kann eine kostengünstig herstellbare und effiziente Verriegelungsmechanik geschaffen werden.

In einer besonders vorteilhaften Ausführungsform kann die Verriegelungseinrichtung derart mit der Auslöseanordnung zusammenwirken, dass durch Druck auf einen Betätigungsknopf das Deckelgehäuseteil in die Schliessstellung überführbar ist. Somit kann ein Anwender bei Bedarf eine geöffnete Tierfalle wieder Schliessen. Besonders bevorzugt ist dabei die benötigte Druckkraft höher als das Körpergewicht des Tieres.

Durch einen Entriegelungsknopf, der vorzugsweise im Bereich der Rückwand auf dem Deckabschnitt positioniert ist, kann ein gefangenes Tier auf einfache Art und Weise wieder befreit werden. Insbesondere kann das Verletzungsrisiko des Anwenders erheblich gesenkt werden, da bei der Befreiung das Tier nicht in Berührung mit dem Anwender kommen kann.

Die Sperrklinke der Verriegelungseinrichtung kann derart ausgestaltet sein, dass durch Druck auf den Betätigungsknopf der Auslösevorgang eingeleitet werden kann. Dazu kann sie einen Anschlag für die Auslöseanordnung insbesondere im Bereich der Trittplattform bilden. Auf diese Weise kann das Deckelgehäuseteil durch einen Anwender besonders einfach in die Schliessstellung überführt werden.

Das Grundgehäuseteil, das Deckelgehäuseteil, die Auslöseanordnung und vorzugsweise auch die Verriegelungseinrichtung können Bauteile aus Kunststoff sein, die durch Schnappverbindungen zusammensetzbar sind. Diese Ausgestaltung hat den Vorteil, dass sie einfach und kostengünstig herstellbar ist. Zudem könnte so gänzlich auf Metallteile verzichtet werden.

An der Rückwand des Grundgehäuseteils kann eine Öffnung vorgesehen sein, in welche ein Schieberelement mit einer Aufnahme für eine Ködersubstanz einsetzbar ist. Beispielsweise könnte das Schieberelement über eine Nut-Führungs-Anordnung seitlich in die Öffnung eingeschoben werden. Selbstverständlich könnte das Schieberelement aber auch auf andere Weise, beispielsweise durch stirnseitiges Aufschnappen an die Rückwand befestigt werden.

Weitere Einzelmerkmale und Vorteile der Erfindung ergeben sich aus der nachfolgenden Beschreibung der Ausführungsbeispiele und aus den Zeichnungen. Es zeigen:
- Figur 1: eine perspektivische Explosionsdarstellung einer erfindungsgemässen Tierfalle,
- Figur 2: eine perspektivische Darstellung der Tierfalle gemäss Figur 1 in Offenstellung,
- Figur 3: eine perspektivische Darstellung der Tierfalle gemäss Figur 1 in Schliessstellung,
- Figur 4: einen Querschnitt durch eine leicht modifizierte Tierfalle in Offenstellung, und
- Figur 5: einen Querschnitt durch die Tierfalle gemäss Figur 4 in Schliessstellung.

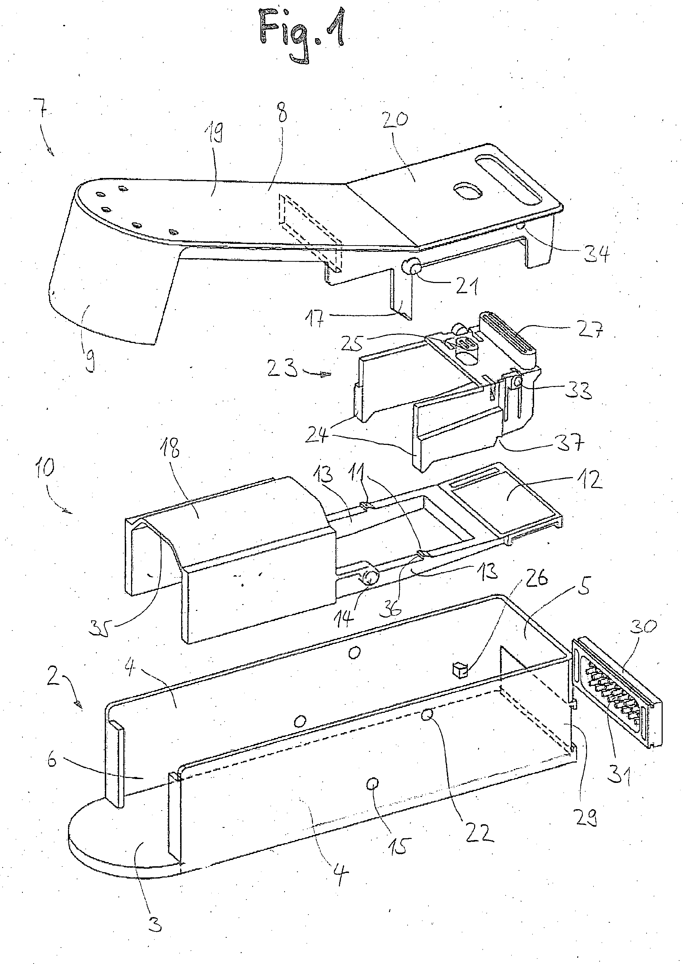

Wie Figur 1 zeigt, besteht eine erfindungsgemässe Tierfalle aus verhältnismässig wenigen Bauteilen. Die wesentlichen Bauteile sind: ein Grundgehäuseteil 2, ein Deckelgehäuseteil 7, eine Auslöseanordnung 10 sowie eine Verriegelungseinrichtung 23. Diese Bauteile bestehen vorzugsweise aus Kunststoff und können durch ein Spritzguss-Verfahren auf einfache Art und Weise hergestellt werden. Zum Zusammensetzen der Bauteile sind Gelenknocken 14, 21, 33 und dazu korrespondierende Gelenkpfannen in Form von Aussparungen 15, 22 und 34 vorgesehen. Diese Befestigungsanordnung gestattet ein Zusammensetzen durch blosses Aufschnappen.

Wie aus Figur 1 weiter hervorgeht, ist das Grundgehäuseteil 2 gegen seine Oberseite hin offen ausgebildet. Es weist zwei Seitenwände 4, eine Rückwand 5 und eine der Rückwand gegenüberliegende Eingangsöffnung 6 auf. In der Rückwand 5 ist eine Öffnung 29 angeordnet, in welche ein Schieberelement 30 über eine Nut-Führungs-Anordnung von der Seite her einschiebbar ist. Dieses Schieberelement 30 weist eine Aufnahme 31 für einen Köder auf. Als Köder können - je nach Einsatzzweck - verschiedene pflanzliche und/oder tierische Substanzen verwendet werden.

In den Seitenwänden 4 sind kreisförmige Öffnungen angebracht. In die Öffnung 15 ist über die Gelenknocken 14 die Auslöseanordnung 10 und in die Öffnung 22 über den Gelenknocken 21 das Deckelgehäuseteil 7 schwenkbar befestigbar. Die Verriegelungseinrichtung 23 ist über die Gelenknocken 33 in die korrespondierende Öffnung 34 im Deckelgehäuseteil 7 schwenkbar befestigbar. Selbstverständlich wäre aber auch eine Befestigungsanordnung mit Hilfe von separaten Achsteilen vorstellbar.

Das Deckelgehäuseteil besteht im Wesentlichen aus einem Dachabschnitt 8 und einem an dessen vorderen Ende angeordneten, etwa senkrecht dazu verlaufenden Stirnwandabschnitt 9. Der Stirnwandabschni.tt 9 versperrt die Eingangsöffnung 6 in Schliessstellung. Der Dachabschnitt 8 besteht aus einer vorderen Deckfläche 19 und einer hinteren Deckfläche 20. Im Bereich der hinteren Deckfläche sind Öffnungen für die Aufnahme eines Betätigungsknopfs 25 und eines Entriegelungsknopfs 27 vorgesehen. Weiter ragt vom Dachabschnitt 8 in Richtung des Bodenabschnitts 3 ein Sperrglied 17 weg.

Die Auslöseanordnung 10 ist als Wippe mit zwei Armen 13 ausgestaltet, wobei an einem Ende der Arme eine Trittplattform 12 und am anderen Ende ein gegen den Bodenabschnitt 3 offener Einführabschnitt 18 angeordnet ist. Die Schwenkachse (S2) der Wippe wird durch die Gelenknocken 14 definiert. Grundsätzlich wird die Tierfalle durch Betreten der Trittplattform ausgelöst. Es ist jedoch auch vorstellbar, dass der Auslösevorgang durch Anstossen an den Verbindungssteg 35 des im Querschnitt U-förmigen Einführbereichs 18 eingeleitet werden kann. Beispielsweise bei einem (versuchten) Eintritt durch ein zu grosses Tier.

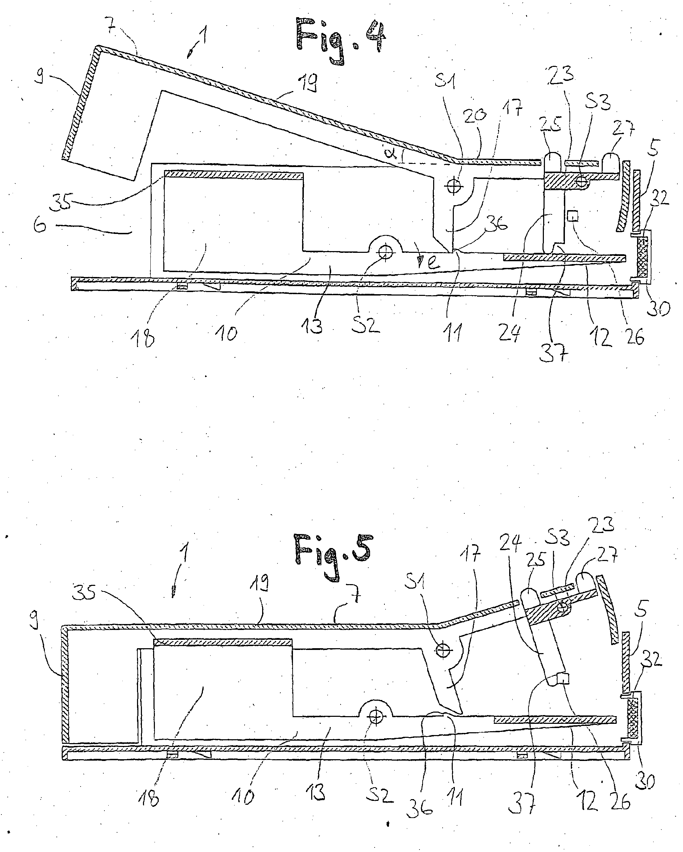

An den Armen 13 sind Rückhaltemittel 11 für Sperrglieder 17 des Deckelgehäuseteil 7 vorgesehen. Gemäss vorliegendem Ausführungsbeispiel ist die Verriegelungsvorrichtung ebenfalls als einstückiges Bauteil ausgebildet. Die Verriegelungseinrichtung 23 weist Sperrklinken 24 auf, die bzw. deren Rastabschnitte 37 in Schliessstellung an auf der Innenseite der Seitenwände 4 angebrachten Widerlager 26 eingreifen. Die genaue Wirkungsweise der Tierfalle, insbesondere die Funktion der Auslöseanordnung 10 und der Verriegelungseinrichtung 23 soll nachfolgend anhand der Figuren 4 und 5 im Detail erläutert werden.

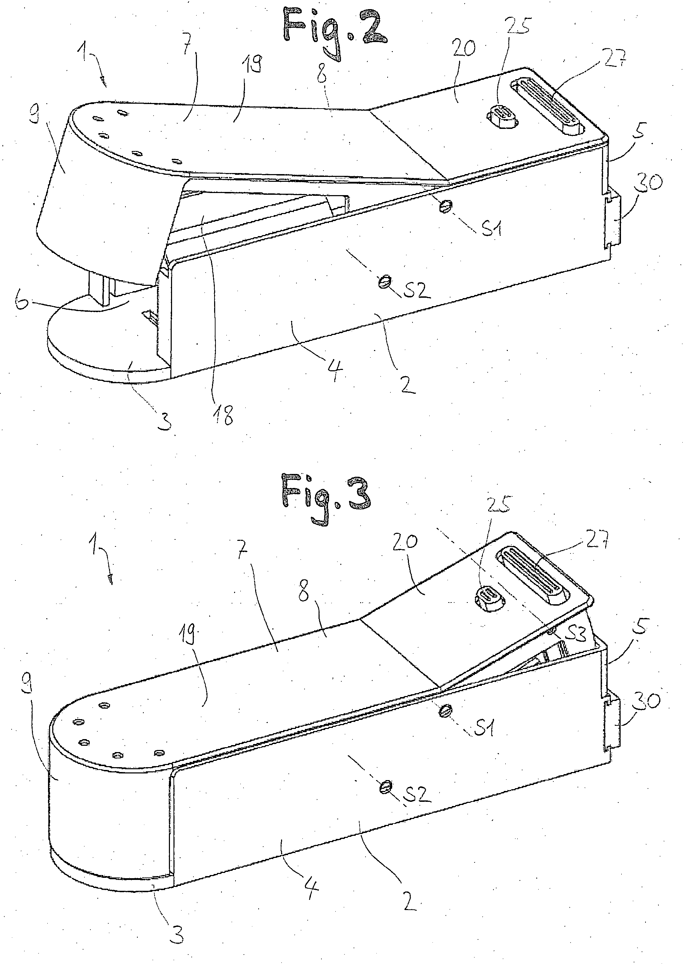

Die Figuren 2 und 3 zeigen Aussenansichten der mit 1 bezeichneten Tierfalle. Ersichtlicherweise lässt die Tierfalle 1 in Offenstellung gemäss Figur 2 den Eintritt eines Tiers durch die Eingangsöffnung 6 zu. In dieser Stellung verläuft die hintere Deckfläche 20 des Deckabschnitts 8 parallel zum Bodenabschnitt 3 des Gehäuses. Das Deckelgehäuseteil 7 ist um die mit S1 bezeichnete Schwenkachse im Grundgehäuseteil 2 gelagert (die weiteren Schwenkachsen sind mit S2 und S3 bezeichnet; vgl. Figur 4/5). Durch einen Auslösevorgang kann die Tierfalle 1 geschlossen werden. Figur 3 zeigt die Tierfalle 1 in Schliessstellung. Ersichtlicherweise verläuft in dieser Stellung die vordere Deckfläche 19 parallel zum Bodenabschnitt 3.

Wie aus Figur 4 klar hervorgeht, ist das Deckelgehäuseteil 7 über das Sperrglied 17 durch das Rückhaltemittel 11 blockiert. Das Rückhaltemittel 11 ist durch einen etwa sägezahnartigen Vorsprung auf dem Arm 13 gebildet, der eine Sperrflanke 36 für den Anschlag des Sperrglieds 17 und eine schräge Flanke aufweist. Durch eine Wippenbewegung in e-Richtung kann das Sperrglied 17 vom Rückhaltemittel 11 frei gegeben werden, wodurch das Deckelgehäuseteil unter Einwirkung der Schwerkraft in einer Art Pendelbewegung in die Schliessstellung überführt wird. Um einem Anwender zu ermöglichen, die Tierfalle auf einfache Art und Weise zu schliessen, ist der Betätigungsknopf 25 der gegenüber Figur 1 leicht angepassten Verriegelungseinrichtung 23 vorgesehen. Wie Figur 4 zeigt, bildet die Sperrklinke 24 einen Anschlag für die Trittplattform 12. Somit kann durch Druck auf den Betätigungsknopf 25 über die Sperrklinke 24 die Auslöseanordnung ebenfalls in die zur Auslösung erforderliche Wippbewegung gebracht werden. Dabei ist die Tierfalle 1 derart ausgestaltet, dass eine gewisse Druckkraft nötig ist, um den Auslösevorgang herbeizuführen. So soll verhindert werden, dass der Schliessvorgang durch Einwirken eines Tiers auf den Betätigungsknopf 25 ausgelöst werden könnte.

Figur 5 zeigt, dass in Schliessstellung das Deckelgehäuseteil 7 durch die Verriegelungseinrichtung 23 gesichert ist. Die Sperrklinke 24 rastet über den Rastabschnitt 37 an einem korrespondierenden Widerlager 26 ein. Zum Lösen der Rastverbindung ist der Entriegelungsknopf 27 vorgesehen. Durch Druck auf den Entriegelungsknopf kann die Verriegelungseinrichtung 23 derart um die Schwenkachse S3 ausgeschwenkt werden, dass die Sperrklinke 24 vom Widerlager 26 freigegeben werden kann.

## Patentansprüche

1. Tierfalle (1) insbesondere zum Fangen von Mäusen oder anderen Kleintieren mit einem kastenförmigen Gehäuse, enthaltend ein gegen seine Oberseite offenes Grundgehäuseteil (2) mit einer Eingangsöffnung (6) und ein zwischen einer Schliesstellung und einer Offenstellung schwenkbar am Grundgehäuseteil befestigtes Deckelgehäuseteil (7), das einen Dachabschnitt (8) zum Abdecken der Oberseite des Grundgehäuseteils (2) und einen Stirnwandabschnitt (9) zum Versperren der Eingangsöffnung (6) in Schliessstellung aufweist, wobei das Deckelgehäuseteil (7) mit Hilfe von mechanischen Rückhaltemitteln (11) in Offenstellung blockierbar ist und wobei zur Aufhebung der Blockierung im Innern des Gehäuses eine mit dem Deckelgehäuseteil (7) in Wirkverbindung stehende mechanische Auslöseanordnung (10) angeordnet ist, welche insbesondere durch das Eigengewicht des Tiers auslösbar ist, **dadurch gekennzeichnet, dass** die Auslöseanordnung (10) wippenartig im Grundgehäuseteil (2) gelagert ist, wobei die Wippe zwei seitlich entlang den Seitenwänden(4) sich erstreckende, parallele Arme (13) aufweist, an denen an einem Ende eine Trittplattform (12) und am gegenüberliegenden Ende ein im Querschnitt etwa U-förmiger, gegen den Bodenabschnitt (3) offen ausgebildeter Einführabschnitt (18) angeordnet ist.

2. Tierfalle nach Anspruch 1, **dadurch gekennzeichnet, dass** das Deckelgehäuseteil (7) in der Offenstellung derart im Grundgehäuseteil gelagert ist, dass es unter Einwirkung der Schwerkraft nach einem Auslösevorgang in die Schliessstellung überführbar ist.

3. Tierfalle nach Anspruch 1 oder 2, **dadurch gekennzeichnet, dass** das Deckelgehäuseteil (7) unter Federvorspannung in Offenstellung gehalten ist.

4. Tierfalle nach einem der Ansprüche 1 bis 3, **dadurch gekennzeichnet, dass** die Auslöseanordnung (10) eine Trittplattform (12) oder eine Stossplattform enthält.

5. Tierfalle nach einem der Ansprüche 1 bis 4, **dadurch gekennzeichnet, dass** die Auslöseanordnung (10) eine Trittplattform (12) aufweist, an welcher zwei sich seitlich entlang Seitenwänden (4) des Grundgehäuseteils (2) erstreckende, parallele Arme (13) sich anschliessen, die schwenkbar im Grundgehäuseteil (2) gelagert sind.

6. Tierfalle nach Anspruch 5, **dadurch gekennzeichnet, dass** seitlich an den Armen (13) der Auslöseanordnung (10) Gelenknocken (14) angeordnet sind, die in korrespondierende Gelenkpfannen (15), insbesondere gebildet durch Öffnungen in Seitenwänden (4) des Grundgehäuseteils (2) eingreifen.

7. Tierfalle nach einem der Ansprüche 5 bis 6, **dadurch gekennzeichnet, dass** die Rückhaltemittel (11) durch Widerlager der Auslöseanordnung (10) gebildet sind, an welche jeweils Sperrglieder (17) des Deckelgehäuseteils (7) in Offenstellung sich abstützen.

8. Tierfalle nach einem der Ansprüche 1 bis 7, **dadurch gekennzeichnet, dass** der Dachabschnitt (8) eine vordere Deckfläche (19) und eine derart um einen Neigungswinkel (α) abgewinkelte hintere Deckfläche (20) aufweist, dass die vordere Deckfläche (19) in Schliessstellung und die hintere Deckfläche (20) in Offenstellung etwa parallel zum (20) in Offenstellung etwa parallel zum Bodenabschnitt (3) verläuft.

9. Tierfalle nach einem der Ansprüche 1 bis 8, **dadurch gekennzeichnet, dass** jeweils seitlich am Deckelgehäuseteil (7) Gelenknocken (21) angeordnet sind, die in korrespondierende Gelenkpfannen (22), insbesondere gebildet durch Öffnungen in den Seitenwänden (4) eingreifen.

10. Tierfalle nach einem der Ansprüche 1 bis 9, **dadurch gekennzeichnet, dass** am Dachabschnitt (8) des Deckelgehäuseteils (7) eine Verriegelungseinrichtung (23) mit wenigstens einer Sperrklinke (24) angeordnet ist, die in Schliessstellung an einem korrespondierenden Widerlager (26) am Gehäuse einrastbar ist.

11. Tierfalle nach Anspruch 10, **dadurch gekennzeichnet, dass** die Verriegelungseinrichtung (23) zum Wiederherstellen der Offenstellung des Deckelgehäuseteils (7) einen Entriegelungsknopf (27) aufweist.

12. Tierfalle nach Anspruch 11 oder 10, **dadurch gekennzeichnet, dass** die Verriegelungseinrichtung (23) ein separates am Deckelgehäuseteil (7) gelagertes, vorzugsweise einstückiges Bauteil mit einer Sperrklinke (24) und einem Entriegelungsknopf (27) zum Wiederherstellen der Offenstellung ist, wobei durch Einwirken auf den Entriegelungsknopf (27) die Verriegelungseinrichtung derart schwenkbar ist, dass die Sperrklinke (24) vom Widerlager (26) freigegeben werden kann.

13. Tierfalle nach einem der Ansprüche 10 bis 12, **dadurch gekennzeichnet, dass** die Verriegelungseinrichtung (23) derart mit der Auslöseanordnung (10) zusammenwirkt, dass durch Druck auf einen Betätigungsknopf (25) das Deckelgehäuseteil (7) in die Schliesstellung überführbar ist.

14. Tierfalle nach Anspruch 13, **dadurch gekennzeichnet, dass** die Verriegelungseinrichtung (23) derart ausgebildet ist, dass die Druckkraft zur Betätigung des Betätigungsknopf (25) des Deckelgehäuses (7) höher als das Eigengewicht des Tieres ist.

15. Tierfalle nach Anspruch 13 oder 14, **dadurch gekennzeichnet, dass** die Sperrklinke (24) der Verriegelungseinrichtung (23) durch Druck auf einen Betätigungsknopf (25) einen Anschlag für die Auslöseanordnung (10) insbesondere im Bereich einer Trittplattform (12) bildet.

16. Tierfalle nach einem der Ansprüche 1 bis 15, **dadurch gekennzeichnet, dass** das Grundgehäuseteil (2), das Deckelgehäuseteil (7), die Auslöseanordnung (10) und vorzugsweise auch eine Verriegelungseinrichtung (23) Bauteile aus Kunststoff sind, die durch Schnappverbindungen zusammensetzbar sind.

17. Tierfalle nach einem der Ansprüche 1 bis 16, **dadurch gekennzeichnet, dass** an einer der Eingangsöffnung (6) gegenüberliegenden Rückwand (5) eine Öffnung (29) vorgesehen ist, in welche ein Schieberelement (30) mit einer Aufnahme (31) für eine Ködersubstanz einsetzbar ist.

## Claims

1. Animal trap (1), in particular for catching mice or other small animals, having a box-shaped housing containing a basic housing part (2) which is open towards the top side and has an entry opening (6), and a cover housing part (7) which is fastened on the basic housing part (2) in such a manner that it is pivotable between a closed position and an open position, said cover housing part (7) having a roof section (8) for covering the top side of the basic housing part (2) and an end wall section (9) for blocking the entry opening (6) in the closed position, wherein the cover housing part (7) is blockable in the open position by way of mechanical retaining means (11) and wherein, in order to release the blockage, a mechanical trigger arrangement (10), which is operatively connected to the cover housing part (7), is located in the interior of the housing, said trigger arrangement (10) being, in particular, triggerable by the own weight of the animal, **characterized in that** the trigger arrangement (10) is mounted in the manner of a rocker in the basic housing part (2), wherein the rocker has two parallel arms (13) extending laterally along the side walls (4), a step platform (12) being located at one end of said arms and an inlet section (18) being located at the opposite end, said inlet section (18) having an approximately U-shaped cross section and being configured open towards the floor section (3).

2. Animal trap according to Claim 1, **characterized in that**, in the open position, the cover housing part (7) is mounted in the basic housing part in such a manner that after a triggering operation it can be converted to the closed position by the effect of gravity.

3. Animal trap according to Claim 1 or 2, **characterized in that** the cover housing part (7) is held in the open position by spring pretensioning.

4. Animal trap according to one of Claims 1 to 3, **characterized in that** the trigger arrangement (10) contains a step platform (12) or an impact platform.

5. Animal trap according to one of Claims 1 to 4, **characterized in that** the trigger arrangement (10) has a step platform (12) which is adjoined by two parallel arms (13) extending laterally along side walls (4) of the basic housing part (2), said arms (13) being pivotably mounted in the basic housing part (2).

6. Animal trap according to Claim 5, **characterized in that** joint cams (14) are located laterally on the arms (13) of the trigger arrangement (10), said joint cams (14) engaging in corresponding joint sockets (15), in particular formed by openings in side walls (4) of the basic housing part (2).

7. Animal trap according to one of Claims 5 to 6, **characterized in that** the retaining means (11) are formed by abutments of the trigger arrangement (10), on which abutments in each case locking elements (17) of the cover housing part (7) bear in the open position.

8. Animal trap according to one of Claims 1 to 7, **characterized in that** the roof section (8) has a front cover surface (19) and a rear cover surface (20) which is angled at an angle of inclination (α) in such a manner that the front cover surface (19) in the closed position and the rear cover surface (20) in the open position extend approximately parallel to the floor section (3).

9. Animal trap according to one of Claims 1 to 8, **characterized in that** joint cams (21) are located in each case laterally on the cover housing part (7), which joint cams (21) engage in corresponding joint sockets (22), in particular formed by openings in the side walls (4).

10. Animal trap according to one of Claims 1 to 9, **characterized in that** a locking unit (23) with at least one retaining latch (24), which in the closed position is latchable on a corresponding abutment (26) on the housing, is located on the roof section (8) of the cover housing part (7).

11. Animal trap according to Claim 10, **characterized in that** the locking unit (23) has a release button (27) for reinstating the open position of the cover housing part (7).

12. Animal trap according to Claim 10 or 11, **characterized in that** the locking unit (23) is a separate, preferably unipartite component mounted on the cover housing part (7), having a retaining latch (24) and a release button (27) for reinstating the open position, wherein by action on the release button (27), the locking unit is pivotable in such a manner that the retaining latch (24) can be released from the abutment (26).

13. Animal trap according to one of Claims 10 to 12, **characterized in that** the locking unit (23) interacts with the trigger arrangement (10) in such a manner that by pressure on a push button (25), the cover housing part (7) can be converted to the closed position.

14. Animal trap according to Claim 13, **characterized in that** the locking unit (23) is configured in such a manner that the pressure force for activating the push button (25) of the cover housing part (7) is greater than the own weight of the animal.

15. Animal trap according to Claim 13 or 14, **characterized in that** the retaining latch (24) of the locking unit (23), by pressure on a push button (25), forms a stop for the trigger arrangement (10), in particular in the region of a step platform (12).

16. Animal trap according to one of Claims 1 to 15, **characterized in that** the basic housing part (2), the cover housing part (7), the trigger arrangement (10), and preferably also a locking unit (23) are components made of plastic, which components can be assembled by means of snap-fit connections.

17. Animal trap according to one of Claims 1 to 16, **characterized in that** an opening (29) is provided on a rear wall (5) opposite the entry opening (6), in which opening (29) a slider element (30) with a holder (31) for a bait substance is insertable.

## Revendications

1. Piège pour animaux (1), en particulier pour attraper des souris ou d'autres petits animaux, avec un boîtier en forme de caisson, contenant une partie de boîtier de base (2) ouverte vers son côté supérieur avec une ouverture d'entrée (6) et une partie de boîtier de couvercle (7) fixée à la partie de boîtier de base et pouvant pivoter entre une position de fermeture et une position d'ouverture, laquelle partie de boîtier de couvercle présente une portion de toit (8) pour recouvrir le côté supérieur de la partie de boîtier de base (2) et une portion de paroi frontale (9) pour bloquer l'ouverture d'entrée (6) dans la position de fermeture, la partie de boîtier de couvercle (7) pouvant être bloquée dans la position d'ouverture à l'aide de moyens de retenue mécaniques (11) et un agencement de déclenchement mécanique (10) en liaison fonctionnelle avec la partie de boîtier de couvercle (7) étant disposé à l'intérieur du boîtier pour supprimer le blocage, lequel agencement de déclenchement peut être déclenché notamment par le propre poids de l'animal, **caractérisé en ce que** l'agencement de déclenchement (10) est monté à la manière d'une bascule dans la partie de boîtier de base (2), la bascule présentant deux bras parallèles (13) s'étendant latéralement le long des parois latérales (4), au niveau desquels bras, à une extrémité, est disposée une plate-forme de passage (12) et à l'extrémité opposée est disposée une portion d'introduction (18) de section transversale approximativement en forme de U, réalisée de manière ouverte vers la portion de fond (3).

2. Piège pour animaux selon la revendication 1, **caractérisé en ce que** la partie de boîtier de couvercle (7) est montée, dans la position d'ouverture, dans la partie de boîtier de base de telle sorte qu'elle puisse être transférée après une opération de déclenchement dans la position de fermeture sous l'action de la force de pesanteur.

3. Piège pour animaux selon la revendication 1 ou 2, **caractérisé en ce que** la partie de boîtier de couvercle (7) est maintenue par précontrainte par ressort dans la position d'ouverture.

4. Piège pour animaux selon l'une quelconque des revendications 1 à 3, **caractérisé en ce que** l'agencement de déclenchement (10) contient une plate-forme de passage (12) ou une plate-forme de butée.

5. Piège pour animaux selon l'une quelconque des revendications 1 à 4, **caractérisé en ce que** l'agencement de déclenchement (10) présente une plate-forme de passage (12) au niveau de laquelle se raccordent deux bras parallèles (13) s'étendant latéralement le long de parois latérales (4) de la partie de boîtier de base (2), lesquels bras sont montés de manière à pouvoir pivoter dans la partie de boîtier de base (2).

6. Piège pour animaux selon la revendication 5, **caractérisé en ce que** des cames d'articulation (14) sont disposées latéralement au niveau des bras (13) de l'agencement de déclenchement (10), lesquelles cames viennent en prise dans des cavités articulaires (15) correspondantes qui sont notamment formées par des ouvertures dans les parois latérales (4) de la partie de boîtier de base (2).

7. Piège pour animaux selon l'une quelconque des revendications 5 à 6, **caractérisé en ce que** les moyens de retenue (11) sont formés par des butées de l'agencement de déclenchement (10) contre lesquelles s'appuient à chaque fois des organes de blocage (17) de la partie de boîtier de couvercle (7) dans la position d'ouverture.

8. Piège pour animaux selon l'une quelconque des revendications 1 à 7, **caractérisé en ce que** la portion de toit (8) présente une surface de recouvrement avant (19) et une surface de recouvrement arrière (20) coudée suivant un angle d'inclinaison (α) de telle sorte que la surface de recouvrement avant (19) dans la position de fermeture et la surface de recouvrement arrière (20) dans la position d'ouverture s'étendent approximativement parallèlement à la portion de fond (3).

9. Piège pour animaux selon l'une quelconque des revendications 1 à 8, **caractérisé en ce qu'**à chaque fois des cames d'articulation (21) sont disposées latéralement sur la partie de boîtier de couvercle (7), lesquelles cames viennent en prise dans des cavités articulaires correspondantes (22), en particulier formées par des ouvertures dans les parois latérales (4).

10. Piège pour animaux selon l'une quelconque des revendications 1 à 9, **caractérisé en ce qu'**au niveau de la portion de toit (8) de la partie de boîtier de couvercle (7) est disposé un dispositif de verrouillage (23) avec au moins un cliquet d'arrêt (24), lequel cliquet d'arrêt peut être encliqueté dans la position de fermeture sur le boîtier au niveau d'une butée correspondante (26).

11. Piège pour animaux selon la revendication 10, **caractérisé en ce que** le dispositif de verrouillage (23) présente, pour rétablir la position d'ouverture de la partie de boîtier de couvercle (7), un bouton de déverrouillage (27).

12. Piège pour animaux selon la revendication 11 ou 10, **caractérisé en ce que** le dispositif de verrouillage (23) est un composant séparé monté sur la partie de boîtier de couvercle (7), de préférence d'une seule pièce, avec un cliquet d'arrêt (24) et un bouton de déverrouillage (27) pour rétablir la position d'ouverture, le dispositif de verrouillage pouvant pivoter sous l'effet d'une action sur le bouton de déverrouillage (27), de telle sorte que le cliquet d'arrêt (24) puisse être libéré de la butée (26).

13. Piège pour animaux selon l'une quelconque des revendications 10 à 12, **caractérisé en ce que** le dispositif de verrouillage (23) coopère avec l'agencement de déclenchement (10) de telle sorte que la partie de boîtier de couvercle (7) puisse être transférée dans la position de fermeture par pression sur un bouton d'actionnement (25).

14. Piège pour animaux selon la revendication 13, **caractérisé en ce que** le dispositif de verrouillage (23) est réalisé de telle sorte que la force de pression pour l'actionnement du bouton d'actionnement (25) de la partie de boîtier de couvercle (7) soit supérieure au propre poids de l'animal.

15. Piège pour animaux selon la revendication 13 ou 14, **caractérisé en ce que** le cliquet d'arrêt (24) du dispositif de verrouillage (23) forme, par pression sur un bouton d'actionnement (25), une butée pour l'agencement de déclenchement (10), en particulier dans la région d'une plate-forme de passage (12).

16. Piège pour animaux selon l'une quelconque des revendications 1 à 15, **caractérisé en ce que** la partie de boîtier de base (2), la partie de boîtier de couvercle (7), l'agencement de déclenchement (10) et de préférence également un dispositif de verrouillage (23) sont des composants en plastique qui peuvent être assemblés par des liaisons par encliquetage.

17. Piège pour animaux selon l'une quelconque des revendications 1 à 16, **caractérisé en ce qu'**une ouverture (29) est prévue au niveau d'une paroi arrière (5) opposée à l'ouverture d'entrée (6), dans laquelle peut être inséré un élément tiroir (30) avec un logement (31) pour un appât.
